# FASCICULE DE BREVET EUROPEEN

(11) **EP 1 147 730 B1**
(45) Date de publication et mention de la délivrance du brevet: **25.02.2004**
(21) Numéro de dépôt: 01420088.5
(22) Date de dépôt: 10.04.2001
(51) Int. Cl.: A47J 31/56

(54) **Cafetière expresso à deux thermostats**
Espressokaffeemaschine mit zwei Thermostaten
Espresso type coffee machine with two thermostats

(30) Priorité: 21.04.2000 FR 0005189
(43) Date de publication de la demande: 24.10.2001
(73) Titulaire: SEB S.A., 69130 Ecully (FR)
(72) Inventeur: Charles, Patrick, 65290 Louey (FR); Rouches, Alexandre, 65310 Horgues (FR); Lafond, Jean Marie, 65420 Ibos (FR)

(56) Documents cités:
- EP-A- 0 631 752
- FR-A- 2 465 451
- US-A- 4 242 568
- US-A- 5 337 652

## Description

La présente invention concerne les cafetières à pression du type expresso.

Ce type de cafetière possède le plus souvent une fonction de production de vapeur, laquelle est utilisée pour réchauffer une boisson. Pour ce faire le générateur d'eau chaude peut être réglé à une température supérieure à celle de l'ébullition de l'eau.

On connaît ainsi par exemple par le brevet FR2465451 les cafetières équipées de deux thermostats qui permettent à la chaudière de la cafetière de réchauffer l'eau à deux températures différentes, selon l'emploi désiré, c'est à dire comme liquide d'infusion ou comme vapeur surchauffée.

L'eau arrive dans le corps de chauffe de la cafetière et s'y réchauffe au passage. La température du corps de chauffe est réglée pour obtenir un café à bonne température dans la tasse réceptrice. Cependant, la première introduction d'eau dans le corps de chauffe en fait baisser sensiblement la température avant que le thermostat n'ait pu réagir, de sorte que les cafés de tasses successives ont des températures insuffisantes ou irrégulières.

Quand l'eau devient insuffisamment chaude on pourrait arrêter la pompe comme suggéré dans le brevet US4109565, mais ce procédé est évidemment mal ressenti par l'utilisateur impatient ou qui peut penser à une panne.

On connaît les cafetières par exemple par le brevet FR2774882 où ce problème est résolu par un circuit électronique de commande, beaucoup plus réactif qu'un simple thermostat généralement à bilame. Cependant une telle commande électronique spécifique à la cafetière en renchérit le prix de revient.

Le but de l'invention ci après est une cafetière économique ne présentant pas les inconvénients cités précédemment.

Le but de l'invention est atteint par une cafetière ayant un réservoir d'eau froide, une pompe, un bloc de chauffe équipé d'un premier et d'un deuxième thermostat, un filtre, remarquable en ce que le deuxième thermostat dont la consigne est plus élevée est mis en service en même temps que la pompe pour produire l'eau chaude nécessaire au café.

L'invention se satisfait pleinement de thermostats électromécaniques à consigne fixe peu coûteux. Cependant on peut trouver avantage à utiliser deux thermostats électroniques simples pour des raisons particulières, d'encombrement ou de mise en place par exemple, sans sortir du cadre de l'invention. On peut aussi utiliser un seul capteur d'un thermostat électronique simple dont le signal est comparé à une parmi deux valeurs de consignes fixes, l'une correspondant à la température de consigne du premier thermostat, l'autre à celle du deuxième thermostat sans sortir du cadre de l'invention. Dans ce qui suit on supposera, par souci de clarté, que la cafetière est équipée de deux thermostats.

De la sorte, le bloc de chauffe est réglé par un premier thermostat à une première température par exemple 95°C suffisante pour amener l'eau à la température nécessaire à l'extraction du café. Lors de la mise en route de la pompe, un deuxième thermostat dont la température de consigne est plus élevée par exemple 115°C est mis en service. L'écart entre cette température de consigne et la température du bloc à la mise en route s'ajoute à la baisse de température du bloc de chauffe due au passage de l'eau. Ceci donne un signal fort au thermostat qui assure rapidement l'alimentation en puissance électrique de chauffage.

De préférence la puissance installée de la cafetière est adaptée à échauffer le débit nominal de l'eau destinée au café à la température d'extraction.

On sait qu'il faut environ 335 Joules pour échauffer un centimètre cube d'eau de la température de puisage ou de stockage dans le réservoir (environ 15°C) à la température d'extraction du café (environ 95°C),

Mais dans tous les cas l'inertie thermique du bloc de chauffe contribue à lisser les écarts de température de l'eau qui pourraient survenir à cause d'une différence d'adaptation entre la puissance de chauffe et le débit d'eau. Si la puissance installée est correctement ajustée, on peut même envisager de diminuer la masse du bloc de chauffe, l'inertie thermique n'étant plus alors essentielle. L'eau est ainsi à bonne température pendant toute la durée de percolation.

Lorsque l'utilisateur arrête la pompe, le premier thermostat reprend le contrôle de la température du bloc de chauffe, de sorte que quand le débit d'eau s'arrête il ne se produit pas de surchauffe, et la cafetière est immédiatement disponible pour une nouvelle percolation.

De préférence la cafetière comporte une fonction de production de vapeur pendant laquelle, lorsqu'elle est utilisée, le deuxième thermostat contrôle la température du bloc de chauffe.

Le même deuxième thermostat est utilisé pour contrôler le bloc de chauffe pendant la percolation et pour obtenir de la vapeur. Pendant la percolation la puissance de chauffage et les conditions d'échange de chaleur sont insuffisantes vis à vis du débit d'eau pour que la température de l'eau s'élève à la température de consigne, alors que pendant la production de vapeur, le débit d'eau de la pompe est réduit de sorte que le bloc chauffant reste à une température suffisante pour obtenir une bonne vaporisation.

Cette réduction du débit d'eau peut classiquement être obtenue par l'étranglement de l'orifice de sortie de vapeur, ou par un étranglement du circuit d'eau, ou en réduisant le débit de la pompe par des moyens électriques, ou par toute autre combinaison de moyens connus.

La réduction du débit d'eau est une solution simple et satisfaisante, mais toute solution permettant d'obtenir un rapport suffisant entre la puissance électrique et la puissance nécessaire à l'évaporation du débit d'eau permet l'application de l'invention. On peut ainsi augmenter la puissance fournie pendant la vaporisation par exemple en alimentant un deuxième élément chauffant du corps de chauffe, en réduisant moins le débit d'eau pour obtenir un plus grand débit de vapeur.

L'invention sera mieux comprise au vu de l'exemple ci après et des dessins annexés.

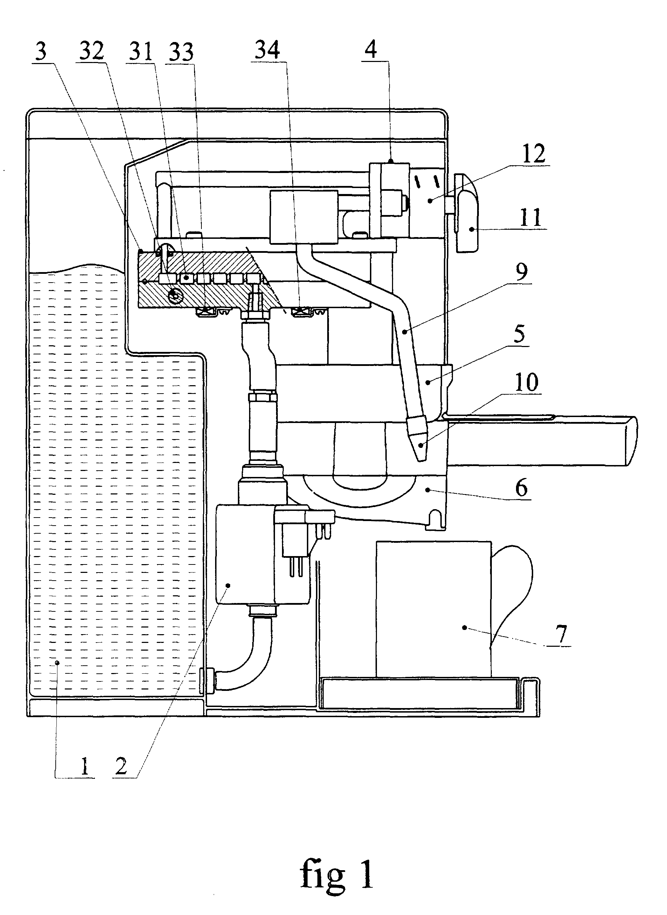

La figure 1 est une vue de profil d'une cafetière selon l'invention, en section partielle de l'enveloppe, du réservoir et du corps chauffant.

La figure 2 est une vue de face du bouton de commande.

La figure 3 est un schéma électrique de principe de l'invention.

La figure 4 est un diagramme de température du bloc de chauffe en fonction du temps avant et pendant l'extraction d'un café.

La figure 5 est un diagramme de température du bloc de chauffe en fonction du temps avant et pendant la production de vapeur.

Dans une réalisation préférentielle la cafetière comporte un circuit d'eau constitué d'amont en aval par un réservoir d'eau 1, une pompe électromagnétique 2, un corps chauffant 3, un distributeur 4, un support 5 et un porte filtre 6 contenant la mouture de café. Le café est reçu dans un réceptacle 7 qui peut être une tasse. La cafetière comporte en outre un conduit de vapeur 9 alimenté par le distributeur 4 et terminé par une buse 10 comportant un gicleur calibré, ce sous ensemble étant accessible par l'utilisateur.

L'utilisateur dispose d'une commande 11 agissant simultanément sur le distributeur 4 et sur un commutateur électrique 12.

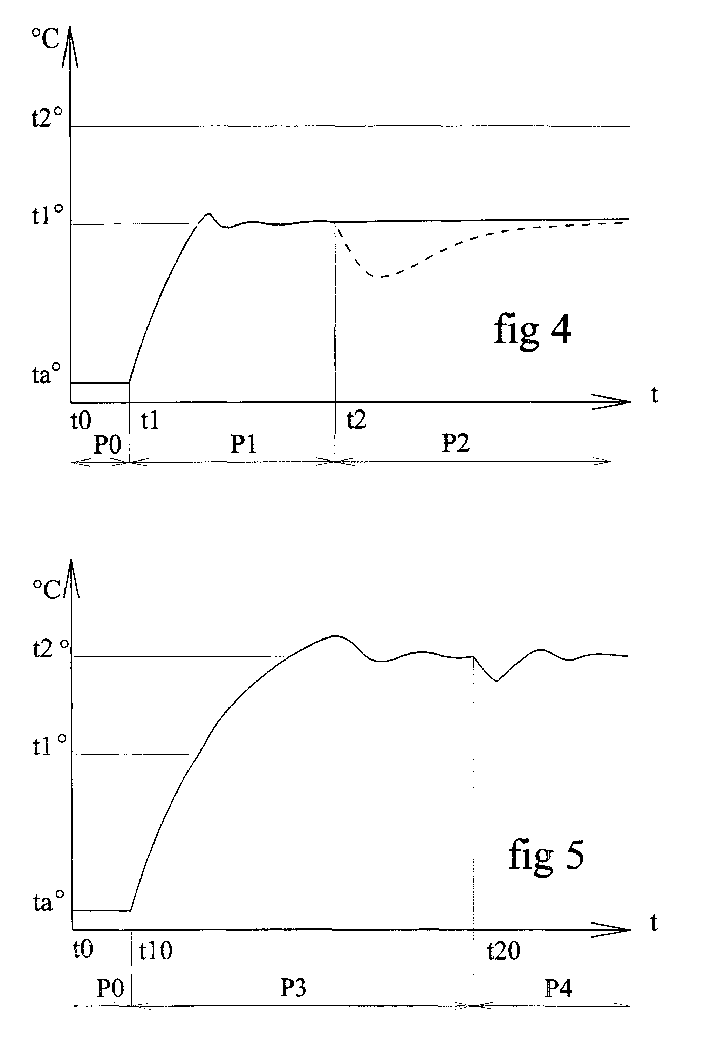

Le bloc chauffant 3 est un bloc en aluminium comportant des canaux 31 dans lesquels l'eau en provenance de la pompe 2 se réchauffe et éventuellement se transforme en vapeur. L'élément chauffant électrique 32 fournit l'énergie nécessaire à ce bloc, lequel est équipé d'un premier thermostat électromécanique 33 réglé au voisinage de 105°C (t1° sur les figures 4 et 5) et un deuxième thermostat électromécanique 34 réglé à environ 125°C (t2° sur les figures 4 et 5).

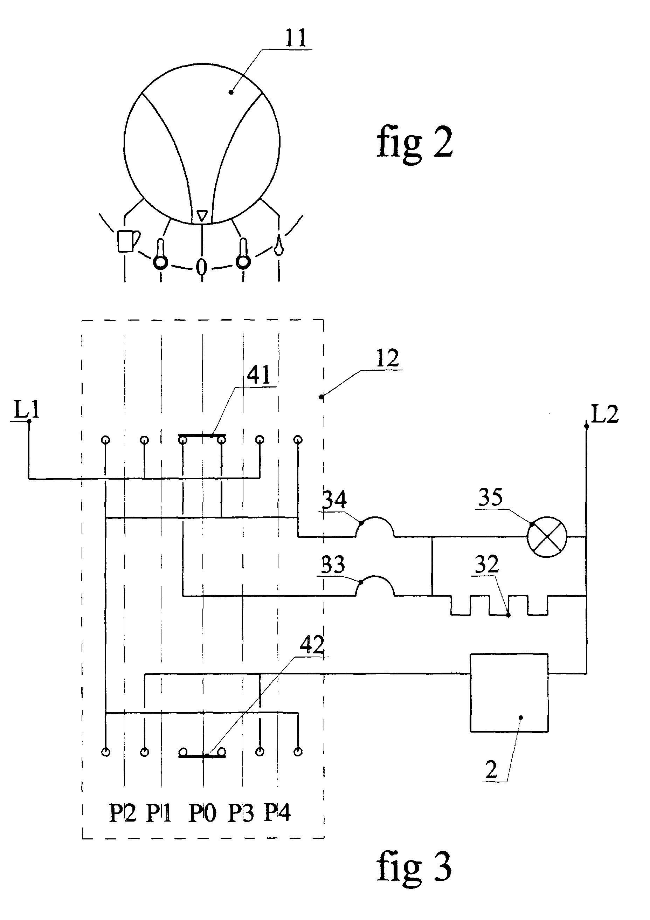

Le distributeur 4 est susceptible d'établir la connexion hydraulique entre le bloc chauffant 3 et le filtre 6 pour faire du café ou entre le bloc chauffant 3 et la sortie de vapeur 9-10 lorsqu'on veut chauffer une boisson. Ce distributeur est commandé par l'utilisateur en même temps que le commutateur 12 par le bouton de commande 11 qui peut prendre cinq positions repérées P0 à P4 sur les figures 3-5 et par des pictogrammes visibles en figure 2 sous le bouton de commande 11. Le bouton de commande 11 entraîne simultanément des contacts glissants 41 et 42 du commutateur 12 de sorte qu'en figure 3 les contacts 41, 42 s'alignent sur une des positions P0 à P4 dont les traits d'axes en trait mixte sont en correspondance avec les pictogrammes de la figure 2.

La position 0 du bouton de commande et P0 du commutateur est la position d'arrêt de la cafetière. Le courant électrique du secteur arrive par les fils repérés L1 et L2 mais aucun élément n'est alimenté.

Lorsque l'utilisateur veut préparer du café, il agit à un temps t1 sur le bouton de commande pour mettre la cafetière en chauffe en position P1 du commutateur. A ce moment le courant électrique peut circuler de L1 vers l'élément chauffant 32 en étant contrôlé par le premier thermostat 33 réglé à la température nécessaire pour obtenir un café.

Utilement un voyant de chauffe 35 en parallèle avec l'élément chauffant 32 s'allume tant que la température de consigne n'est pas atteinte, puis s'éteint lorsque le premier thermostat 33 s'ouvre.

La cafetière ainsi étant prête, l'utilisateur commande à un temps t2 l'extraction du café en amenant le commutateur en position P2. Le distributeur 4 connecte alors le bloc chauffant 3 au porte filtre 6. Le courant électrique circule de L1 vers la pompe 2 et via le thermostat 34 vers l'élément chauffant 32 et son voyant de chauffe 35. La température du bloc chauffant 3 étant inférieure à la température de consigne t2° du thermostat 34, le chauffage est mis en route. La puissance de l'élément chauffant 32 est sensiblement ajustée par construction à la puissance consommée par l'échauffement de l'eau. L'eau circulant en s'échauffant dans le bloc de chauffe 3 en maintient la température sensiblement constante comme on le voit en trait plein sur le diagramme de la figure 4. Les écarts de puissance absorbée dus aux variations de débit d'eau suite à des tassements différents de la mouture par exemple sont faibles devant la puissance totale consommée et sont absorbés par l'inertie thermique du bloc chauffant. Ceci est d'autant plus vrai que le temps d'extraction d'un café n'est jamais très long et que même des écarts importants n'ont pas le temps de se manifester. Par ces moyens on obtient une bonne température d'extraction et on apporte immédiatement l'énergie nécessaire au café pendant toute l'extraction, sans provoquer de surchauffe.

Sans l'utilisation d'un deuxième thermostat avec une température de consigne t2° plus élevée, le premier thermostat 33 n'aurait pas eu le temps de réagir de suite et la température du bloc chauffant aurait accusé une chute comme on peut le voir représenté en pointillé sur la figure 4. Une grande partie du café aurait alors été extraite à trop basse température et aurait donné un café désagréable trop froid.

Lorsque le café est terminé, l'utilisateur peut remettre la cafetière en position d'attente P1 d'extraction d'un nouveau café. La pompe s'arrête et la cafetière est régulée à nouveau par le thermostat 33 à la température d'extraction du café. Il ne peut donc pas se produire de surchauffe et la cafetière est prête pour une nouvelle extraction.

L'utilisateur peut aussi décider de préparer une boisson chaude. Il positionne à un temps t10 le bouton 11 pour que le commutateur 12 soit en position P3. L'élément chauffant 32 est alimenté en énergie électrique via le thermostat 34 et le bloc chauffant 3 s'échauffe à une température de vaporisation de l'eau. La température de consigne t2° du thermostat 34 atteinte, le voyant 35 s'éteint.

L'utilisateur déclenche à un temps t20 la production de vapeur en amenant par le bouton 11 le commutateur en position P4. La pompe 2 est alimentée en électricité, l'élément chauffant 32 continue à être régulé par le thermostat 34. Le distributeur 4 connecte le bloc chauffant 3 au tube 9 dont l'utilisateur fait plonger l'orifice calibré 10 dans la boisson à réchauffer. L'eau se vaporise au contact du bloc chauffant 3 en produisant un grand débit volumique de vapeur. En passant dans l'orifice calibré de la buse 10 la vapeur produit une augmentation de pression, ce qui diminue le débit d'eau. De ce fait la puissance de l'élément chauffant suffit à maintenir la température de vaporisation, assurant un jet de vapeur continu.

La puissance disponible est donc élevée par rapport à celle qui est consommée. De ce fait, la température du bloc chauffant chute peu à la mise en route de la vaporisation et revient rapidement à la température de consigne t2° comme on peut le voir sur la figure 5.

Dans une autre version la pompe 2 comporte, ou est associée à un dispositif séquenceur provoquant une diminution de son facteur de marche, ce qui rend le calibrage de l'orifice de la buse 10 plus aisé.

Dans une autre version l'élément chauffant comporte plusieurs résistances et la puissance est augmentée pendant la vaporisation. Le circuit électrique est modifié en conséquence.

Dans une version plus simple de la cafetière, ne comportant pas de fonction de production de vapeur, les positions P3 et P4 du commutateur sont supprimées.

La cafetière décrite comporte le même nombre de composants qu'une cafetière classique comportant une fonction de production de vapeur, mais l'agencement de ces composants permet une bonne régulation de la température du café boisson obtenu. Dans une version qui ne comporte pas de fonction vaporisation, le perfectionnement ne nécessite qu'un thermostat supplémentaire peu coûteux.

## Revendications

1. Cafetière ayant un réservoir d'eau froide (1), une pompe (2), un bloc de chauffe (3) équipé d'un premier et d'un deuxième thermostat (33,34), un filtre (6), **caractérisée en ce que** le deuxième thermostat (34) dont la consigne est plus élevée est prévu pour être mis en service en même temps que la pompe (2) pour produire l'eau chaude nécessaire au café.

2. Cafetière selon la revendication 1 **caractérisée en ce que** la puissance installée de la cafetière est adaptée à échauffer le débit nominal de l'eau destinée au café à la température d'extraction.

3. Cafetière selon l'une des revendications précédentes **caractérisée en ce que** la cafetière comporte une fonction de production de vapeur pendant laquelle, lorsqu'elle est utilisée, le deuxième thermostat (34) contrôle la température du bloc de chauffe (3).

## Patentansprüche

1. Kaffeemaschine mit einem Behälter (1) für kaltes Wasser, einer Pumpe (2), einem Heizblock (3), der mit einem ersten und einem zweiten Thermostaten (33, 34) ausgestattet ist, und einem Filter (6), **dadurch gekennzeichnet, daß** der zweite Thermostat (34), dessen Sollwert höher ist, vorgesehen ist, um zur gleichen Zeit in Betrieb gesetzt zu werden wie die Pumpe (2), um das für den Kaffee erforderliche heiße Wasser zu erzeugen.

2. Kaffeemaschine nach Anspruch 1, **dadurch gekennzeichnet, daß** die installierte Leistung der Kaffeemaschine angepaßt ist, um die nominale Menge des Wassers, das für den Kaffee vorgesehen ist, auf die Extraktionstemperatur zu erhitzen.

3. Kaffeemaschine nach einem der vorangehenden Ansprüche, **dadurch gekennzeichnet, daß** die Kaffeemaschine eine Funktion zum Erzeugen von Dampf aufweist, während der, wenn sie verwendet wird, der zweite Thermostat (34) die Temperatur des Heizblocks (3) regelt.

## Claims

1. A coffeemaker having a cold water tank (1), a pump (2), a heater unit (3) fitted with first and second thermostats (33, 34), and a filter (6), the coffeemaker being **characterized in that** the second thermostat (34) having the higher reference temperature is designed to be put into service at the same time as a pump (2) to produce the hot water needed for the coffee.

2. A coffeemaker according to claim 1, **characterized in that** the power installed in the coffeemaker is adapted to heat the nominal flow rate of water for making coffee to the extraction temperature.

3. A coffeemaker according to either preceding claim, **characterized in that** the coffeemaker includes a function of producing steam during which, while it is in use, the second thermostat (34) controls the temperature of the heater unit (3).
